# EUROPÄISCHE PATENTANMELDUNG

(11) **EP 2 073 195 A1**
(43) Veröffentlichungstag der Anmeldung: **24.06.2009**
(21) Anmeldenummer: 08105906.5
(22) Anmeldetag: 02.12.2008
(51) Int. Cl.: G10K 11/16

(54) **Verfahren und Vorrichtung zum Unterdrücken, zumindest aber zum Verringern von störenden Vibrationen in einem motorbetriebenen Gerät, insbesondere einem Hausgerät**

(30) Priorität: 17.12.2007 DE 102007060679
(71) Anmelder: BSH Bosch und Siemens Hausgeräte GmbH, 81739 München (DE)
(72) Erfinder: Link, Ulrich, 01108 Dresden (DE); Seidl, Rudolf, 93057 Regensburg (DE)

(57) **Zusammenfassung**

Zum Unterdrücken, zumindest aber zum Verringern einer oder mehrerer störender Vibrationen, insbesondere von Resonanzvibrationen, die von einem mit einem Motor (M) versehenen Gerät, insbesondere von einen Hausgerät beim Lauf des auf unterschiedliche Drehzahlen einstellbaren Motors (M) während zumindest einer bestimmten Drehzahl erzeugt werden, wird die jeweilige Vibration an Hand zumindest einer vibrationsabhängigen Kenngröße ermittelt, und die jeweilige Sollwert-Drehzahl (n_{S}) des Motors (M) wird auf ein der jeweils ermittelten Kenngröße entsprechendes Steuersignal hin durch ihr Erhöhen und/oder Verringern auf eine Istwert-Drehzahl (n_{I}) korrigiert, bei der von der sodann ermittelten Kenngröße ein für eine vorgegebene, insbesondere bei Null liegende Vibrationsstärke kennzeichnender festgelegter Schwellwert unterschritten ist.

## Beschreibung

Die Erfindung bezieht sich auf ein Verfahren und eine Vorrichtung zum Unterdrücken, zumindest aber zum Verringern einer oder mehrerer störender Vibrationen, insbesondere von Resonanzvibrationen, die von einem durch einen Motor betriebenen Gerät, insbesondere von einen Hausgerät beim Lauf des auf unterschiedliche Drehzahlen einstellbaren Motors während zumindest einer bestimmten Drehzahl erzeugt werden.

Es ist bereits ein Hausgerät in Form einer Dunstabzugshaube mit wenigstens teilweiser Auslöschung eines Lüftergeräusches bekannt (DE 44 08 278 A1), bei der mindestens ein Lüfter und ein Strömungskanal vorgesehen sind, der den Ansaugbereich mit dem Lüfter verbindet. Mit einem Referenzmikrofon wird zu kompensierender Störschall des Lüfters von mindestens einer Schallquelle aufgenommen, und mittels eines Fehlermikrofons, welches in Strömungsrichtung hinter der Schallquelle im Ansaugbereich der Dunstabzugshaube angeordnet ist, erfolgt eine weitere Aufnahme des zu kompensierenden Störschalls. In einer Signalverarbeitungseinheit werden die von den beiden Mikrofonen aufgenommenen Störschallsignale verarbeitet und an einen gesonderten Schallgeber abgegeben, der einen gegenphasigen Schall zur wenigstens teilweisen Auslöschung des Störschalls erzeugt. Damit ist aber bei dieser bekannten Dunstabzugshaube ein nicht unerheblicher Verdrahtungsaufwand zwischen den einzelnen Komponenten erforderlich. Außerdem ist es schwierig, dass der von dem gesonderten Schallgeber abgegebene Kompensationsschall sich längs derselben Ausbreitungspfade ausbreitet, längs der sich der zu kompensierende Störschall ausbreitet. Insgesamt ist somit allenfalls eine stark begrenzte Auslöschung des Lüftergeräusches zu erwarten.

Zur Unterdrückung, zumindest aber zur Verringerung einer oder mehrerer störender Vibrationen in einem mit einem Motor versehenen Hausgerät, nämlich in einer Waschmaschine ist bereits ein Schwingungstilger bekannt (DE 102 47 647 A1). Bei diesem bekannten Schwingungstilger ist der Laugenbehälter der Waschmaschine zumindest mit einer Dämpfermasse und mit zumindest einer Tilgermasse versehen. Durch diese zusätzlichen Massen wird versucht, die Schwingfrequenz des Laugenbehälters und damit der Waschmaschine unter eine Schwingungsfrequenz zu legen, die beim normalen Waschmaschinenbetrieb sonst erreicht wird. Der Einsatz solcher Ausgleichsmassen und Tilgermassen erhöht jedoch in unerwünschter Weise das Gewicht des jeweiligen Hausgeräts und ist überdies nicht in allen Hausgeräten möglich, die mit einem Motor, insbesondere mit einem Elektromotor versehen sind, wie insbesondere in Dunstabzugsvorrichtungen.

Zur Dämpfung der Übertragung von Antriebsgeräuschen, die in einem Hausgerät von einem in diesem enthaltenen Elektromotor und/oder einer durch diesen angetriebenen Getriebevorrichtung ausgehen, ist es auch schon bekannt (DE 100 16 301 A1, DE 100 16 330 A1), eine Schwingungsentkopplung zwischen der Antriebsseite und dem Hausgerätegehäuse vorzunehmen. Diese Vorgehensweise eignet sich allerdings lediglich bei Hausgeräten, bei denen der jeweilige Antriebsmotor ein kleineres Bearbeitungsgerät antreibt, wie im Falle einer Küchenmaschine. Für andere Hausgeräte, wie insbesondere für Dunstabzugsvorrichtungen eignet sich diese Schwingungsentkopplung allerdings nicht. Dabei ist nämlich zu berücksichtigen, dass durch derartige Antriebsvorrichtungen Vibrationen in Bereichen hervorgerufen werden können, die nicht direkt mit den angetriebenen Einrichtungen verbunden sind. Für solche Fälle besteht aber ein nicht unerheblicher Bedarf an Unterdrückung, zumindest aber an Verringerung solcher Vibrationen.

Im Zusammenhang mit der Steuerung eines elektrischen Lüftermotors einer Dunstabzugshaube ist es bekannt (DE 102 03 679 A1), die Dunstabzugshaube mit einem elektrischen Lüftermotor, einer Sensoreinheit, einem Steuermodul und einem Bedienungsfeld auszustatten. Das Steuermodul ist dabei über das Bedienungsfeld direkt zwischen manuellem oder automatischem Betrieb umschaltbar, und es weist ein Motorregelungsmodul auf, welches sowohl zur stufenweisen als auch zur kontinuierlichen bzw. quasi-kontinuierlichen Regelung der Drehzahl des Lüftermotors geeignet ist. Über eine Unterdrückung oder zumindest über eine Verringerung einer oder mehrerer störender Vibrationen, die beim Betrieb des Lüftermotors auftreten, ist in diesem Zusammenhang allerdings nichts bekannt.

Es ist allerdings auch schon eine Vorrichtung zum pulsierten Erregen eines Elektromotors bekannt (DE 30 42 371 C2), bei der zur Herabsetzung des durch den Elektromotor hervorgerufenen Schwingungs- und Rauschpegels die Flanken von Erregungsimpulsen des Elektromotors stufenweise ausgebildet werden. Dieser Maßnahme liegt die Erkenntnis zugrunde, dass das erwähnte Rauschen auf die akustische Abstrahlung mechanischer Schwingungen von Konstruktionen zurückzuführen ist und dass diese mechanischen Schwingungen von steilen Flanken der Erregungsimpulse des Erregungssignals des Elektromotors angeregt werden. Diese bekannte Maßnahme genügt jedoch nicht, um in einem Hausgerät Vibrationen zumindest zu verringern, die bei bestimmten Drehzahlen eines das betreffende Hausgerät enthaltenden Motors bei dessen normalen Lauf hervorgerufen werden. Dabei ist nämlich zu berücksichtigen, dass ein einen Motor enthaltendes Hausgerät bei einer oder mehreren bestimmten Motordrehzahlen zu einem schwingenden Gebilde bzw. Resonanzgebilde werden kann, durch das störende Vibrationen erzeugt werden.

Es ist schließlich auch schon im Zusammenhang mit einer Waschmaschine bekannt (siehe Design Views 22/09/97 Maytag: "New washing maschine saves water, washes cleaner" - unter der Internet-Adresse http://www.designnews.com/index.asp?layout=article&articleid=GA150610), mittels eines Beschleunigungsaufnehmers zu ermitteln, ob die Resonanzfrequenz einer zur Kompensation einer Unwucht genutzten Masse zu einer Schleuderdrehzahl passt. Wenn dies nicht der Fall ist, wird bei dieser bekannten Waschmaschine die Schleuderdrehzahl solange verändert, bis die Resonanzfrequenz getroffen ist. Diese bei der jeweiligen Inbetriebnahme der Waschmaschine erfolgende iterative Vorgehensweise wird jedoch in Verbindung mit vielen Hausgeräten als zu zeitaufwendig und damit als unerwünscht angesehen. Anzustreben ist vielmehr eine einfachere und weniger zeitintensive Unterdrückung, zumindest aber Verringerung von störenden Vibrationen in einem Hausgerät.

Der Erfindung liegt daher die Aufgabe zugrunde, einen Weg zu zeigen, wie bei einem Verfahren und einer Vorrichtung der eingangs genannten Art eine oder mehrere störende Vibrationen, insbesondere Resonanzvibrationen in einem motorbetriebenen Gerät, insbesondere in einem motorbetriebenen Hausgerät einfacher und wirksamer als bisher unterdrückt, zumindest aber verringert werden können.

Gelöst wird die vorstehend aufgezeigte Aufgabe zum einen bei einem Verfahren der eingangs genannten Art erfindungsgemäß dadurch, dass die jeweilige Vibration an Hand zumindest einer vibrationsabhängigen Kenngröße ermittelt wird und dass die jeweilige Sollwert- bzw. Sollwert-Drehzahl des Motors auf ein der jeweils ermittelten Kenngröße entsprechendes Steuersignal hin durch ihr Erhöhen und/oder Verringern auf einen Istwert bzw. eine Istwert-Drehzahl korrigiert wird, bei der von der sodann ermittelten Kenngröße ein für eine vorgegebene, insbesondere bei Null liegende Vibrationsstärke kennzeichnender festgelegter Schwellwert unterschritten ist.

Hierdurch ergibt sich der Vorteil, dass auf relativ einfache Weise eine oder mehrere störende Vibrationen, insbesondere Resonanzvibrationen in einem motorbetriebenen Gerät, insbesondere in einem motorbetriebenen Hausgerät einfacher und wirksamer als bisher unterdrückt, zumindest aber verringert werden können. Erreicht wird dies durch einen relativ einfachen Regelungsvorgang in Verbindung mit der Bewertung der jeweils ermittelten Kenngröße mit dem erwähnten Schwellwert. Im Unterschied zu dem eingangs betrachteten Stand der Technik wird bei der vorliegenden Erfindung der Motor in seiner jeweiligen Drehzahl so gesteuert, dass in dem den betreffenden Motor enthaltenden Gerät dann keine störende(n) Vibration(en) mehr auftreten.

Zweckmäßigerweise wird die jeweilige vibrationsabhängige Kenngröße mittels wenigstens eines an bzw. in dem Hausgerät untergebrachten Beschleunigungsaufnehmers ermittelt. Dies bringt den Vorteil einer besonders einfachen direkten, das heißt einer Online-Erfassung von störenden Vibrationen, insbesondere von Resonanzvibrationen mit sich, die in einem mit einem Motor versehenen Gerät bzw. Hausgerät während des Laufs des Motors hervorgerufen werden.

Von besonderem Vorteil ist es, die jeweilige vibrationsabhängige Kenngröße mittels an bzw. in dem Hausgerät untergebrachter Beschleunigungsaufnehmer für mehrere Achsen im kartesischen Koordinatensystem zu ermitteln. Dadurch lassen sich vibrationsabhängige Kenngrößen im dreidimensionalen Raum besonders einfach ermitteln. Dies ermöglicht eine besonders wirksame Unterdrückung, zumindest aber eine Verringerung von störenden Vibrationen.

Gemäß einer weiteren zweckmäßigen Weiterbildung der Erfindung werden von dem jeweiligen Beschleunigungsaufnehmer in einem sämtliche Drehzahlbereiche des Motors umfassenden Suchlauf abgegebene Ausgangssignale aufgenommen, und kritische Drehzahlbereiche werden nach Identifizierung in einem Speicher abgespeichert, auf den zur Steuerung der jeweiligen Istwert-Drehzahl des Motors sodann Bezug genommen wird. Hierdurch ergibt sich der Vorteil, dass die hinsichtlich der Vibrationen kritische Drehzahlbereiche praktisch nur ein einziges Mal identifiziert zu werden brauchen, also danach in einem Offline-Betrieb gearbeitet werden kann, bei dem für die jeweilige zulässige, das heißt keine störenden Vibrationen hervorrufende(n) Motordrehzahl(en) lediglich auf den genannten Speicher Bezug genommen werden kann, um die für einen stationären Motorlauf nicht zu nutzenden Drehzahlen der kritischen Drehzahlbereiche zu berücksichtigen.

Alternativ zur Ableitung der vibrationsabhängigen Kenngrößen mittels Beschleunigungsaufnehmern können die vibrationsabhängigen Kenngrößen aus Schwankungen eines den durch einen Elektromotor gebildeten Motor jeweils durchfließenden Stromes bzw. aus Schwankungen einer von dem betreffenden Motor jeweils aufgenommenen Leistung abgeleitet. Dies bringt den Vorteil einer besonders einfachen Möglichkeit der Erfassung von vibrationsabhängigen Kenngrößen mit sich, ohne gegebenenfalls aufwendige Beschleunigungsaufnehmer einsetzen zu müssen. Dabei wird der Effekt ausgenutzt, dass die Vibrationen klar feststellbare Schwankungen des den durch einen Elektromotor gebildeten Motor jeweils durchfließenden Stromes bzw. der von diesem Elektromotor jeweils aufgenommenen Leistung hervorrufen.

Vorzugsweise wird ein den den Elektromotor jeweils durchfließenden Strom repräsentierendes Signal oder ein die von dem Elektromotor jeweils aufgenommene Leistung repräsentierendes Signal in einem sämtliche Drehzahlbereiche des Motors umfassenden Suchlauf aufgenommen und kritische Drehzahlbereiche werden nach Identifizierung von Schwankungen des betreffenden Stromes oder der betreffenden Leistung in einem Speicher abgespeichert, auf den zur Steuerung der jeweiligen Istwert-Drehzahl des Elektromotors Bezug genommen wird. Auch hierdurch ergibt sich der Vorteil, dass die hinsichtlich der Vibrationen kritische Drehzahlbereiche praktisch nur ein einziges Mal identifiziert zu werden brauchen, also danach in einem Offline-Betrieb gearbeitet werden kann, bei dem für die jeweilige zulässige, das heißt keine störende(n) Vibration(en) hervorrufende(n) Motordrehzahl(en) lediglich auf den genannten Speicher Bezug genommen werden kann.

Gelöst wird die der Erfindung zu Grunde liegende, oben angegebene Aufgabe zum anderen bei einer Vorrichtung zum Unterdrücken, zumindest aber zum Verringern einer oder mehrerer störender Vibrationen, insbesondere von Resonanzvibrationen, die von einem mit einem Motor versehenen Gerät, insbesondere von einen Hausgerät beim Betrieb des durch eine mit dem Motor verbundene Sollwert-Drehzahl-Abgabeeinrichtung auf unterschiedliche Drehzahlen einstellbaren Motors während zumindest einer bestimmten Drehzahl erzeugbar sind, erfindungsgemäß dadurch, dass eine die jeweilige Vibration repräsentierende Kenngröße ermittelnde Erfassungseinrichtung vorgesehen ist, dass in die Verbindung zwischen der Sollwert-Drehzahl-Abgabeeinrichtung und einer den Motor in seiner Drehzahl steuernden Motorsteuereinrichtung eine Drehzahl-Korrektureinrichtung eingefügt ist und dass die Drehzahl-Korrektureinrichtung mit der Erfassungseinrichtung durch eine Korrektureinrichtung verbunden ist, welche die von der Sollwert-Drehzahl-Abgabeeinrichtung durch Abgabe eines Sollwert-Drehzahlsignals festgelegte Sollwert-Drehzahl zu einer solchen Istwert-Drehzahl zu korrigieren gestattet, bei der ein die jeweilige Kenngröße repräsentierendes Signal unterhalb eines festgelegten Schwellwertes liegt.

Hierdurch ergibt sich der Vorteil, dass mit insgesamt relativ geringem Aufwand eine oder mehrere störende Vibrationen, insbesondere Resonanzvibrationen in einem motorbetriebenen Gerät, insbesondere in einem motorbetriebenen Hausgerät einfacher und wirksamer als bisher unterdrückt, zumindest aber verringert werden können. Erreicht wird dies durch eine relativ einfache Regelungsanordnung in Verbindung mit einer Bewertung der jeweils ermittelten Kenngröße mit dem erwähnten Schwellwert. Dabei wird auch bei der Vorrichtung gemäß der Erfindung die Drehzahl des Motors im Unterschied zu dem eingangs betrachteten Stand der Technik so gesteuert, dass in dem den betreffenden Motor enthaltenden Gerät dann keine störende(n) Vibration(en) mehr auftreten.

Zweckmäßigerweise ist in bzw. an dem Hausgerät zumindest ein Beschleunigungsaufnehmer für die Ermittlung der für die jeweilige Vibration kennzeichnenden Kenngröße vorgesehen. Dies bringt den Vorteil eines besonders geringen Aufwands zur Ermittlung der für die jeweilige Vibration kennzeichnenden Kenngröße mit sich.

Vorzugsweise sind in bzw. an dem Hausgerät Beschleunigungsaufnehmer für mehrere Achsen im kartesischen Koordinatensystem untergebracht, längs der die vibrationsabhängigen Kenngrößen ermittelbar sind. Auf diese Weise lassen sich die vibrationsabhängigen Kenngrößen mit besonders geringem Aufwand im dreidimensionalen Raum ermitteln. Dies ermöglicht eine besonders wirksame Erfassung und damit Unterdrückung, zumindest aber eine Verringerung von störenden Vibrationen.

Bei einer zweckmäßigen Weiterbildung der Vorrichtung gemäß der Erfindung ist mit dem jeweiligen Beschleunigungsaufnehmer eine Speicher- und Auswerteeinrichtung verbunden, in der Ausgangssignale des jeweiligen Beschleunigungsaufnehmers in einem sämtliche Drehzahlbereiche des Motors umfassenden Suchlauf aufnehmbar und Vibrationen hervorrufende kritische Drehzahlbereiche identifizierbar sind, und der Motor ist durch die Steuereinrichtung lediglich mit außerhalb der kritischen Drehzahlbereiche liegenden Drehzahlen antreibbar. Dies bringt den Vorteil, dass die hinsichtlich der Vibrationen kritischen Drehzahlbereiche praktisch aufwandsarm nur ein einziges Mal identifiziert zu werden brauchen, also danach in einem Offline-Betrieb gearbeitet werden kann, bei dem für die jeweilige zulässige, das heißt keine störenden Vibrationen hervorrufende(n) Motordrehzahl(en) lediglich auf den genannten Speicher Bezug genommen zu werden braucht.

Alternativ zum Einsatz von Beschleunigungsaufnehmern sind entsprechend weiterer zweckmäßiger Ausbildung der Vorrichtung gemäß der Erfindung eine Strom-Messeinrichtung oder eine Leistungs-Messeinrichtung vorgesehen, durch die die vibrationsabhängigen Kenngrößen repräsentierende Schwankungen des den durch einen Elektromotor gebildeten Motor jeweils durchfließenden Stromes bzw. der von dem betreffenden Motor jeweils aufgenommene Leistung messbar sind. Hierdurch ergibt sich der Vorteil, dass mit besonders geringem Aufwand die vibrationsabhängigen Kenngrößen indirekt ermittelt werden können. Dabei wird der Effekt ausgenutzt, dass die Vibrationen klar feststellbare Schwankungen des den durch einen Elektromotor gebildeten Motor jeweils durchfließenden Stromes bzw. der von diesem Elektromotor jeweils aufgenommenen Leistung hervorrufen.

Vorzugsweise ist mit der Messeinrichtung eine Speicher- und Auswerteeinrichtung verbunden, in der Ausgangssignale der Strom- oder Leistungs-Messeinrichtung in einem sämtliche Drehzahlbereiche des Motors umfassenden Suchlauf aufnehmbar und Vibrationen hervorrufende kritische Drehzahlbereiche identifizierbar sind, und der Motor ist durch die Steuereinrichtung lediglich mit außerhalb der kritischen Drehzahlbereiche liegenden Drehzahlen antreibbar. Auch hierdurch ergibt sich der Vorteil, dass die hinsichtlich der Vibrationen kritischen Drehzahlbereiche praktisch aufwandsarm nur ein einziges Mal identifiziert zu werden brauchen, also danach in einem Offline-Betrieb gearbeitet werden kann, bei dem für die jeweilige zulässige, das heißt keine störenden Vibrationen hervorrufende(n) Motordrehzahl(en) lediglich auf den genannten Speicher Bezug genommen zu werden braucht.

Anhand von Zeichnungen wird die vorliegende Erfindung nachstehend beispielhaft näher erläutert.

In den Zeichnungen zeigen
- Fig. 1: in einer schematischen Darstellung eine Vorrichtung gemäß einer ersten Ausführungsform der vorliegenden Erfindung in einem mit einem Motor versehenen Hausgerät,
- Fig. 2: in einer schematischen Darstellung einen möglichen Aufbau einer in der Vorrichtung gemäß Fig. 1 vorgesehenen Drehzahl-Korrektureinrichtung,
- Fig. 3: in einer schematischen Darstellung eine Vorrichtung gemäß einer zweiten Ausführungsform der vorliegenden Erfindung in einem mit einem Motor versehenen Hausgerät,
- Fig. 4: in einer schematischen Darstellung einen möglichen Aufbau eines in der Vorrichtung gemäß Fig. 3 vorgesehenen Drehzahl-Sollwertfilters,
- Fig. 5: in einer schematischen Darstellung eine Vorrichtung gemäß einer dritten Ausführungsform der vorliegenden Erfindung in einem mit einem Motor versehenen Hausgerät,
- Fig. 6: in einer schematischen Darstellung einen möglichen Aufbau einer in der Vorrichtung gemäß Fig. 5 vorgesehenen Drehzahl-Korrektureinrichtung,
- Fig. 7: in einer schematischen Darstellung eine Vorrichtung gemäß einer vierten Ausführungsform der vorliegenden Erfindung in einem mit einem Motor versehenen Hausgerät und
- Fig. 8: in einer schematischen Darstellung einen möglichen Aufbau einer in der Vorrichtung gemäß Fig. 7 vorgesehenen Drehzahl-Korrektureinrichtung.

Bevor auf die Zeichnungen näher eingegangen wird, sei zunächst angemerkt, dass gleiche Elemente bzw. Einrichtungen in sämtlichen Zeichnungsfiguren durch gleiche Bezugszeichen bezeichnet sind. Ferner sei bemerkt, dass bei den Erläuterungen der in den Zeichnungen veranschaulichten Ausführungsformen der Erfindung auf insbesondere durch Dunstabzugsvorrichtungen bzw. Dunstabzugshauben gebildete Hausgeräte Bezug genommen wird, auf die die Erfindung indessen nicht beschränkt ist.

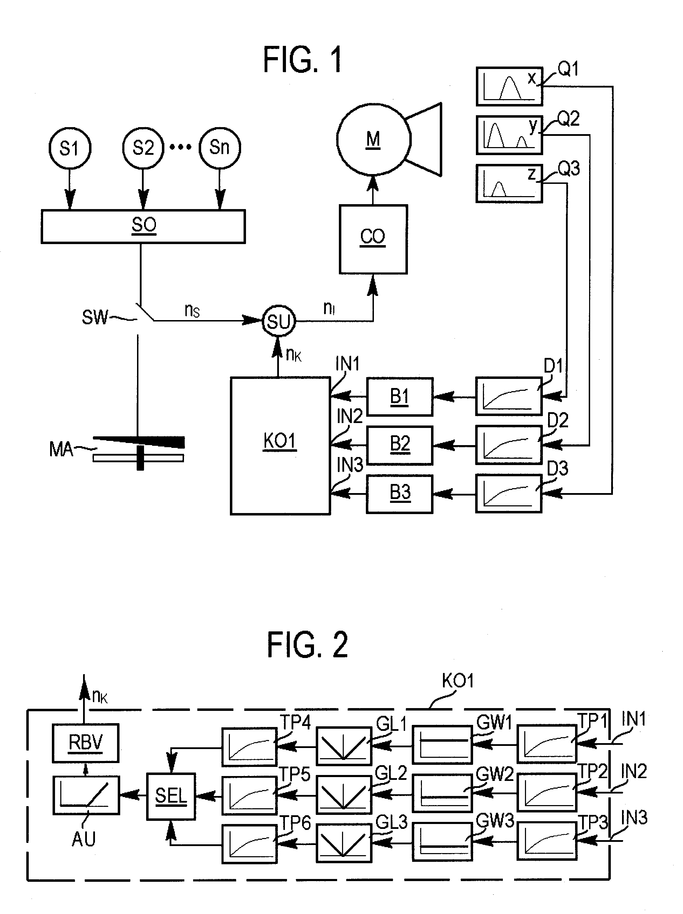

Die in Fig. 1 in einer schematischen Darstellung gezeigte Vorrichtung ist Teil eines mit einem Motor M, der im vorliegenden Fall durch einen Elektromotor gebildet ist, versehenen Hausgerätes, welches im vorliegenden Fall - wie erwähnt - eine Dunstabzugsvorrichtung sein mag. Der Motor M ist mit einer Motorsteuereinrichtung, kurz Steuereinrichtung CO genannt, verbunden, die eine zur Einstellung der jeweiligen Motordrehzahl dienende Drehzahl-Stell- und Regelelektronik aufweist, durch die der Motor M so mit Energie versorgt wird, dass er bei der jeweils gewünschten Drehzahl betrieben wird. Es sei an dieser Stelle angemerkt, dass die Steuereinrichtung CO beispielsweise mit einer Phasenanschnitt-Steuereinrichtung oder einer Schwingungspaket-Steuereinrichtung für einen 1-Phasen-Asynchronmotor mit Hilfskondensator oder für einen Spaltmotor als Motor M ausgebildet sein kann. Im übrigen kann die Steuereinrichtung CO auch einen Frequenzumrichter enthalten, der einen den erwähnten Motor M bildenden Einphasen- oder Mehrphasen-Asynchronmotor oder einen anderen, üblicherweise bürstenlosen Motor antreiben kann.

Die Steuereinrichtung CO ist eingangsseitig mit dem Ausgang eines zwei Eingänge aufweisenden Summiergliedes SU verbunden, von dem der Steuereinrichtung CO Eingangssignale zur Festlegung der jeweiligen Motordrehzahl des Motors M zugeführt werden. Das Summierglied SU ist mit seinem einen Eingang an der Ausgangsseite eines Schalters SW angeschlossen - das ist im vorliegenden Fall der Schaltarm eines Umschalters.

Der Schalter SW ist eingangsseitig mit einer Sollwert-Drehzahl-Abgabeeinrichtung verbunden, die aus einem automatisch arbeitenden Abgabeeinrichtungsteil und einem manuell einstellbaren Abgabeeinrichtungsteil besteht.

Der Umschalter bzw. Schalter SW ist mit seinem einer Eingangsseite mit dem Ausgang einer zu dem automatisch arbeitenden Abgabeeinrichtungsteil gehörenden Sollwert-Bildungseinrichtung SO verbunden. In der in Fig. 1 gezeigten Schalterstellung des Schalters SW gelangen von der Sollwert-Bildungseinrichtung SO zur Verfügung gestellte Sollwerte bzw. Sollwert-Drehzahlen nₛ zu dem einen Eingang des Summiergliedes SU. Die Sollwert-Bildungseinrichtung SO bildet diese Sollwertsignale aus ihr eingangsseitig von Sensoren S1, S2 ... Sn zugeführten Sensorsignalen. Die Sensoren S1, S2 ... Sn können in einem Bereich, in dem die betrachtete Dunstabzugsvorrichtung vorgesehen ist, unterschiedliche Größen in der Luft ermitteln, wie die Temperatur, den Dampfgehalt, den Fettgehalt, etc. Aus diesen Größen bildet die Sollwert-Bildungseinrichtung SO einen solchen Sollwert bzw. eine solche Sollwert-Drehzahl nₛ, dass durch die daraufhin erfolgende Ansteuerung des Motors M dieser mit einer Drehzahl betrieben wird, durch die eine Verringerung der betreffenden Größen, wie der Temperatur, des Dampfgehalts, des Fettgehalts, etc. in der Luft ermöglicht wird.

Der Schalter SW ist mit einem weiteren Eingangsanschluss, an dem der Schaltarm des betreffenden Schalters SW in Fig. 1 nicht anliegt, mit einem zu dem manuell einstellbaren Abgabeeinrichtungsteil gehörenden manuellen Einstellglied MA verbunden. Bei diesem manuellen Einstellglied MA kann es sich beispielsweise um ein Potentiometer handeln, welches beispielsweise an einer Spannungsquelle angeschlossen ist und welches durch seine Einstellung Spannungen unterschiedlicher Amplitude dem weiteren Eingang des Summiergliedes SU und damit dem Eingang der Steuereinrichtung CO zur Festlegung der Drehzahl des Motors M zuzuführen gestattet.

Im Bereich der in Fig. 1 schematisch dargestellten Dunstabzugsvorrichtung sind Schwingungsquellen Q1, Q2, Q3 dargestellt, die Vibrationen längs der Achsen bzw. Koordinaten x, y und z in einem kartesischen Koordinatensystem erzeugen. Diese Vibrationen können, wie in Fig. 1 bei den einzelnen Schwingungsquellen Q1, Q2 und Q3 angedeutet, in den verschiedenen Koordinaten zu unterschiedlichen Zeitpunkten auftretende unterschiedliche Amplituden aufweisen.

Die betreffenden Schwingungsquellen Q1, Q2, Q3 sind Teil der schematisch dargestellten Dunstabzugsvorrichtung; sie geben ihre Vibrationen, insbesondere Resonanzvibrationen infolge des Laufes des Motors M ab. Die betreffenden Vibrationen erfahren in der Dunstabzugsvorrichtung Dämpfungen, welche in Fig. 1 mit D1, D2 bzw. D3 angedeutet sind. Diese Dämpfungen treten zwischen den Schwingungsquellen Q1, Q2, Q3 und eine Erfassungseinrichtung darstellenden Beschleunigungsaufnehmern B1, B2, B3 auf, die im vorliegenden Fall den drei Koordinaten bzw. Achsen x, y bzw. z im kartesischen Koordinatensystem zugeordnet sind. Es sei an dieser Stelle angemerkt, dass grundsätzlich mit wenigstens einem Beschleunigungsaufnehmer ausgekommen werden kann, um eine oder mehrere beim Lauf des zugehörigen Motors M auftretende störende Vibrationen und insbesondere Resonanzvibrationen zu ermitteln. Die erwähnten Dämpfungen D1, D2 und D3 sind im allgemeinen für jede der Achsen x, y und z und für jede Schwingungsquelle unterschiedlich.

Die Beschleunigungsaufnehmer B1, B2 und B3 können entweder diskret aufgebaute und angeordnete Beschleunigungsaufnehmer (je ein Beschleunigungsaufnehmer ist für jede zu erfassende Beschleunigung vorgesehen) oder in einem gegebenenfalls ohnehin vorhandenen Baustein integriert sein. Die Beschleunigungsaufnehmer B1, B2 und B3 sind im vorliegenden Fall ausgangsseitig mit Eingängen IN1, IN2 und IN3 einer Drehzahl-Korrektureinrichtung KO1 verbunden. Diese Drehzahl-Korrektureinrichtung KO1 bildet aus den ihr von den Beschleunigungsaufnehmern B1, B2 und B3 eingangsseitig zugeführten vibrationsabhängigen Kenngrößen einen Korrekturwert bzw. eine darauf basierende Korrekturwert-Drehzahl n_{K}, die dem bereits erwähnten Summierglied SU an einem weiteren Eingang zugeführt wird. Das Summierglied SU bildet aus dem ihr an dem einen Eingang zugeführten Sollwert bzw. der darauf basierenden Sollwert-Drehzahl nₛ und dem gerade erwähnten Korrekturwert bzw. der Korrekturwert-Drehzahl n_{K} einen Istwert bzw. eine Istwert-Drehzahl nₗ, mit der die Steuereinrichtung CO angesteuert wird. Durch die Ansteuerung wird in der Steuereinrichtung CO entweder eine Erhöhung oder eine Verringerung der Drehzahl des Motors M bewirkt, und zwar je nachdem, für welche Steuerung - also Erhöhung oder Verringerung der Motordrehzahl - die Drehzahl-Korrektureinrichtung hinsichtlich der Abgabe des Korrekturwerts bzw. der Korrekturwert-Drehzahl n_{K} ausgelegt ist. Es ist aber auch möglich, dass die Drehzahl des Motors M bei diesem Steuerungsvorgang zuerst erhöht und dann verringert oder zuerst verringert und dann erhöht wird.

Mit der Abgabe des Korrekturwerts bzw. der Korrekturwert-Drehzahl nₖ durch die Drehzahl-Korrektureinrichtung KO1 wird aus dem jeweiligen Sollwert bzw. der jeweiligen Sollwert-Drehzahl nₛ mittels des Summiergliedes SU ein Istwert bzw. eine Istwert-Drehzahl nₗ gebildet, bei dem bzw. der von der sodann in der Drehzahl-Korrektureinrichtung KO1 ermittelten Kenngröße ein für eine vorgegebene, insbesondere bei Null liegende Vibrationsstärke kennzeichnender festgelegter Schwellwert unterschritten ist. Dies bedeutet, dass die Sollwert-Drehzahl des Motors M zu einer unterhalb oder oberhalb dieser Sollwert-Drehzahl liegenden Istwert-Drehzahl verändert wird, bei der die erwähnten störenden Vibrationen und insbesondere die Resonanzvibrationen unterdrückt, zumindest aber verringert sind.

In Fig. 2 ist in einer schematischen Darstellung ein möglicher Aufbau der bei der Vorrichtung gemäß Fig. 1 vorgesehenen Drehzahl-Korrektureinrichtung KO1 veranschaulicht. In Fig. 2 sind die Eingänge IN1, IN2 und IN3 der Drehzahl-Korrektureinrichtung KO1 bezeichnet, die im Zusammenhang mit Fig. 1 bereits erwähnt wurden. Mit den betreffenden Eingängen IN1, IN2, IN3 sind Tiefpassfilter TP1, TP2, TP3 eingangsseitig verbunden, durch die die von den Beschleunigungsaufnehmern B1, B2, B3 jeweils abgegebenen Signale - die vibrationsabhängige Kenngrößen darstellen - zur leichteren Verarbeitung leicht geglättet werden. Anschließend werden die Signale in Gewichtungseinrichtungen GW1, GW2 bzw. GW3 durch unterschiedliche Verstärkung gewichtet. Als Kriterium für die Auswahl der Verstärkung werden insbesondere zwei Größen berücksichtigt:

Der Grad, in welchem eine oder mehrere Vibrationen, insbesondere Resonanzvibrationen als unangenehm empfunden werden, hängt wesentlich von der Richtung ab, in der das jeweilige Schwingungssignal abgestrahlt wird. So wird eine Vibration, die zum Bediener der Dunstabzugsvorrichtung abgestrahlt wird, stärker verstärkt als ein Vibrationssignal, welches in anderer Richtung auftritt. Dieses stärker verstärkte Signal wird maßgeblich zum Unterdrücken, zumindest aber zum Verringern der jeweils störenden Vibration herangezogen.

Wenn ein Beschleunigungsaufnehmer nicht unmittelbar an der eine oder mehrere störende Vibrationen erzeugenden Schwingungsquelle angebracht ist, kann er die jeweilige Schwingung nur gedämpft aufnehmen. Um dennoch eine halbwegs genaue Bewertung der ursächlichen Vibration vornehmen zu können, wird das Ausgangssignal des betreffenden Beschleunigungsaufnehmers verstärkt. Da die besonders vibrationsgefährdeten Stellen einer Dunstabzugsvorrichtung im allgemeinen bekannt sind, ist auch die wirksame Dämpfung näherungsweise bekannt, so dass der passende Verstärkungsfaktor in jeder der Gewichtungseinrichtungen GW1, GW2, GW3 relativ leicht festgelegt werden kann.

Den Gewichtungseinrichtungen GW1, GW2, GW3 sind ausgangsseitig Gleichrichter GL1, GL2, GL3 nachgeordnet, die entweder, wie aus Fig. 2 ersichtlich ist, eine Vollweggleichrichtung bewirken oder die für eine Einweggleichrichtung ausgelegt sein können. Durch den Einsatz der Gleichrichter GL1, GL2 und GL3 ist vermieden, dass sich Signale aus den verschiedenen Kanälen ausgangsseitig bei einer Zusammenfassung gegenseitig aufheben.

Den Gleichrichtern GL1, GL2 und GL3 sind ausgangsseitig Tiefpassfilter TP4, TP5 bzw. TP6 nachgeordnet, durch die zur erleichterten Signalverarbeitung eine nochmalige Glättung der in den einzelnen Kanälen auftretenden Signale erfolgt.

Am Ausgang der Tiefpassfilter TP4, TP5 und TP6 ist eine Auswahleinrichtung SEL eingangsseitig angeschlossen. Diese Auswahleinrichtung SEL mag so ausgelegt sein, dass sie entweder nur das jeweils stärkste Signal der ihr eingangsseitig zugeführten Signale weiter verarbeitet oder dass sie die Summe sämtliche ihr eingangsseitig zugeführten Signale verarbeitet. Je nach ausgewählter Möglichkeit stellt die Auswahleinrichtung SEL somit eine Maximalwert-Auswahleinrichtung oder einen Addierer dar.

Ausgangsseitig ist die Auswahleinrichtung SEL mit dem Eingang einer Ausblendeinrichtung AU verbunden, durch die solche Signale ausgeblendet bzw. ausgefiltert werden, die einen festgelegten Grenzwert des dieser Ausblendeinrichtung AU jeweils zugeführten Beschleunigungssignals unterschreiten und damit für den Bediener nicht störend sind. Um auch in besonders hartnäckigen Fällen eine zumindest erhebliche Verringerung von vibrationsbedingten Geräuschen zu erzielen, kann der Grenzwert - das ist die Knickstelle in dem in der dargestellten Ausblendeinrichtung AU eingezeichneten Kurvenverlauf- frei einstellbar sein. Ferner können Signalanteile in außerhalb des Hörbereichs liegenden Grenzbereichen ausgefiltert werden.

Der Ausblendeinrichtung AU ist ausgangsseitig eine mit RBV bezeichnete Funktionsstufe nachgeordnet, bei der es sich um eine hier kombiniert dargestellte Regler-Begrenzer-Vorzeichenauswahleinrichtung handelt. In dieser Regler- Begrenzer-Vorzeichenauswahleinrichtung RBV wird festgelegt, ob der von dieser abzugebende Korrekturwert bzw. die Korrekturwert-Drehzahl n_{K} die aktuelle Motordrehzahl des Motors M erhöhen oder verringern soll. Dazu stehen hier verschiedene Strategien zur Verfügung, die auch miteinander kombiniert werden können.
1. Generelle Erhöhung der Motordrehzahl des Motors M solange, wie ein zuvor festgelegter Maximalwert für den Korrekturwert bzw. die Korrekturwert-Drehzahl n_{K} oder ein maximaler Istwert bzw. eine maximale Istwert-Drehzahl nₗ nicht überschritten wird. Andernfalls erfolgt eine Umkehrung des Vorzeichens des Signals am Ausgang der Regler-Begrenzer und Vorzeichenauswahleinrichtung RBV.
2. Ebenfalls Umkehr des Vorzeichens des Signals am Ausgang der Regler-Begrenzer-Vorzeichenauswahleinrichtung RBV, sofern bei zu verringernder Motordrehzahl des Motors M ein vorgegebener Minimalwert für den Korrekturwert bzw. die Korrekturwert-Drehzahl n_{K} oder ein minimaler Sollwert bzw. eine minimale Sollwert-Drehzahl n_{K} unterschritten wird.
3. Sofern mehrmals eine Vorzeichenumkehr durch die Regler-Begrenzer-Vorzeichenauswahleinrichtung RBV erfolgt, ohne dass eine akzeptable Motordrehzahl des Motors M gefunden wird, wird die Regler-Begrenzer-Vorzeichenauswahleinrichtung RBV angehalten, wenn eine solche Motordrehzahl erreicht ist, bei der die geringsten Vibrationen auftreten, und zwar auch dann, wenn der erwähnte Grenzwert der Ausblendeinrichtung AU überschritten wird. Hierzu wird während eines Suchvorgangs diejenige innerhalb des minimalen und des maximalen Korrekturwerts n_{K} liegende Motordrehzahl in einem (hier nicht dargestellten) Speicher abgespeichert, bei der das am Eingang der Ausblendeinrichtung AU anliegende Signal den geringsten Wert aufweist. Diese Drehzahl wird dann durch die Steuereinrichtung CO in dem Motor M eingestellt, bis die Regler-Begrenzer-Vorzeichenauswahleinrichtung RBV nach Vorgabe eines neuen Sollwerts bzw. einer neuen Sollwert-Drehzahl n_{S} wieder freigegeben wird. Der betreffende Speicher kann in der Regler-Begrenzer-Vorzeichenauswahleinrichtung RBV enthalten bzw. dieser zugehörig sein.

Um zu verhindern, dass eine zu große Abweichung der jeweils vorgegebenen Sollwert-Drehzahl n_{S} eingestellt wird, wird der Korrekturwert bzw. die Korrekturwert-Drehzahl n_{K} im Begrenzer der Regler-Begrenzer-Vorzeichenauswahleinrichtung RBV auf den minimalen Korrekturwert und den maximalen Korrekturwert begrenzt.

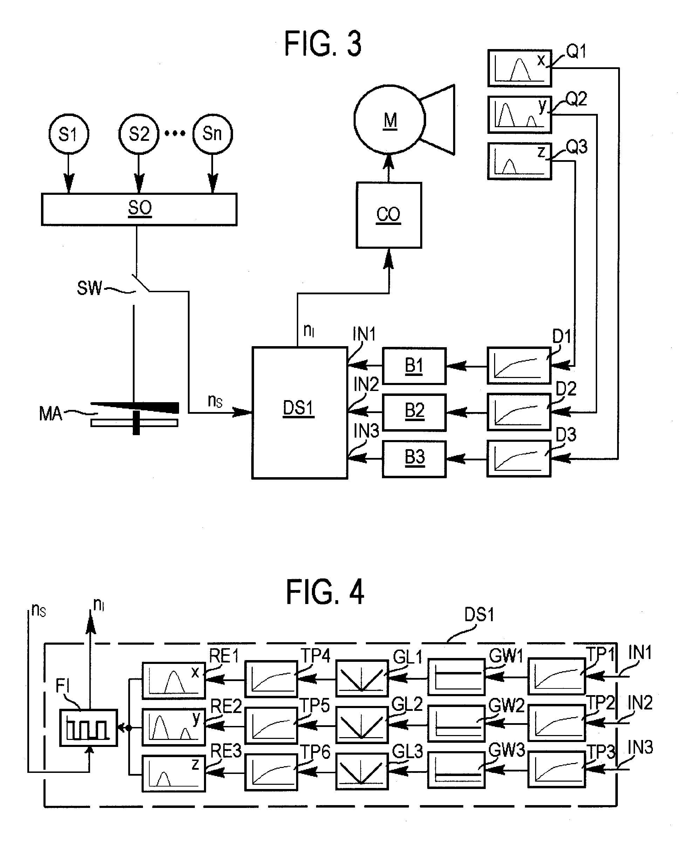

Während die in Fig. 1 schematisch dargestellte Vorrichtung gemäß der ersten Ausführungsform der vorliegenden Erfindung in einem mit einem Motor versehenen Hausgerät, insbesondere in einer Dunstabzugsvorrichtung zur direkten, das heißt Online-Erfassung von Vibrationen, insbesondere von Resonanzvibrationen dient, die von dem mit dem Motor M versehenen Hausgerät beim Lauf des betreffenden Motors M während zumindest einer bestimmten Drehzahl erzeugt werden, zeigt Fig. 3 in einer schematischen Darstellung eine ganz ähnliche Vorrichtung gemäß einer zweiten Ausführungsform der vorliegenden Erfindung für eine Offline-Erfassung von Vibrationen, insbesondere von Resonanzvibrationen, die von einem mit einem Motor versehenen Hausgerät, welches gemäß Fig. 3 ebenfalls durch eine Dunstabzugsvorrichtung gebildet sein mag, beim Lauf des betreffenden Motors erzeugt werden.

Nachdem die in Fig. 3 dargestellte Vorrichtung in ihrem Aufbau weitgehend mit dem Aufbau der in Fig. 1 dargestellten Vorrichtung gemäß der ersten Ausführungsform der vorliegenden Erfindung übereinstimmt, dürfte es genügen, im folgenden lediglich auf die Unterschiede zwischen den beiden Vorrichtungen einzugehen.

Im Unterschied zu der in Fig. 1 dargestellten Vorrichtung ist bei der Vorrichtung gemäß Fig. 3 die in der Vorrichtung gemäß Fig. 1 vorgesehene Drehzahl-Korrektureinrichtung KO1 durch ein nachstehend noch näher zu betrachtendes Drehzahl-Sollwertfilter DS1 ersetzt, welches mit Eingängen IN1, IN2 und IN3 an den Ausgängen der Beschleunigungsaufnehmer B1, B2 bzw. B3 verbunden ist. Mit einem weiteren Eingang ist das ebenfalls zur Drehzahlkorrektur dienende Drehzahl-Sollwertfilter DS1 mit der Ausgangsseite des im Zusammenhang mit Fig. 1 beschriebenen Schalters SW verbunden. Über diese Verbindung wird dem Drehzahl-Sollwertfilter DS1 der jeweilige Sollwert bzw. die jeweilige Sollwert-Drehzahl nₛ eingangsseitig zugeführt, mit der der Motor M laufen soll. Ausgangsseitig ist das Drehzahl-Sollwertfilter DS1 direkt mit der dem Motor M zugehörigen Steuereinrichtung CO verbunden. Ein Summierglied, wie es bei der Vorrichtung gemäß Fig. 1 vorgesehen ist, ist bei der Vorrichtung gemäß Fig. 3 nicht vorhanden.

Bei der in Fig. 3 dargestellten Vorrichtung wird insbesondere beim erstmaligen Einschalten nach dem Anlegen einer Versorgungsspannung automatisch der gesamte relevante Drehzahlbereich des Motors M durchfahren. Dabei werden die Signale der Beschleunigungsaufnehmer B1, B2, B3 in dem Drehzahl-Sollwertfilter DS1 ausgewertet, und es werden kritische Drehzahlbereiche, in denen unerwünschte Vibrationen bzw. starke Resonanzen und daraus resultierende Geräusche auftreten, identifiziert und in einem (nicht dargestellten) Speicher abgespeichert. Im Betrieb der in Fig. 3 dargestellten Vorrichtung in dem insbesondere durch eine Dunstabzugsvorrichtung gebildeten Hausgerät wird dann lediglich ein Durchfahren, nicht jedoch ein stationäres Anfahren dieser kritischen Drehzahlbereiche zugelassen. Fällt beispielsweise ein eingestellter Sollwert bzw. eine vorgegebene Sollwert-Drehzahl nₛ in einen solchen kritischen Drehzahlbereich, wird ein anderer unkritischer Sollwert bzw. eine andere unkritische Sollwert-Drehzahl nₛ an die Steuereinrichtung CO für den Motor M weitergeleitet.

Mit der Abgabe des in diesem Fall korrigierten Istwerts bzw. der Istwert-Drehzahl nₗ durch das Drehzahl-Sollwertfilter DS1 wird der Motor M durch die Steuereinrichtung CO derart angesteuert, dass die sodann durch die in dem Drehzahl-Sollwertfilter DS1 ermittelte Kenngröße ein für eine vorgegebene, insbesondere bei Null liegende Vibrationsstärke kennzeichnender festgelegter Schwellwert unterschritten ist. Dies bedeutet, dass auch hier die Sollwert-Drehzahl des Motors M zu einer unterhalb oder oberhalb dieser Sollwert-Drehzahl liegenden Istwert-Drehzahl verändert wird, bei der die erwähnten störenden Vibrationen und insbesondere die Resonanzvibrationen unterdrückt, zumindest aber verringert sind.

In Fig. 4 ist in einer schematischen Darstellung ein möglicher Aufbau des in der Vorrichtung gemäß Fig. 3 vorgesehenen Drehzahl-Sollwertfilters DS1 veranschaulicht. Das Drehzahl-Sollwertfilter DS1 gemäß Fig. 4 enthält wie die in Fig. 2 dargestellte Drehzahl-Korrektureinrichtung KO1 eingangsseitig die Tiefpassfilter TP1, TP2, TP3, die diesen nachgeordneten Gewichtungseinrichtungen GW1, GW2, GW3 sowie die diesen nachgeordneten Gleichrichter GL1, GL2, GL3 und die diesen nachgeschaltete Tiefpassfilter TP4, TP5 bzw. TP6. Ausgangsseitig sind die Tiefpassfilter TP4, TP5, TP6 mit Eingängen von Resonanz-Erfassungseinrichtungen RE1, RE2 bzw. RE3 verbunden. In diesen Resonanz-Erfassungseinrichtungen RE1, RE2, RE3 werden die in dem erwähnten Suchlauf, in welchem der gesamte relevante Drehzahlbereich des Motors M durchfahren wird, auftretenden Vibrationen und insbesondere Resonanzvibrationen der Dunstabzugsvorrichtung erfasst. Aus den so erfassten Werten werden "verbotene" Drehzahlbereiche für den Motor M abgeleitet und in einem in Fig. 4 nicht dargestellten Speicher abgespeichert. Die Motordrehzahlen derartiger "verbotener" Drehzahlbereiche, die also störende Vibrationen in dem insbesondere durch eine Dunstabzugsvorrichtung gebildeten Hausgerät hervorrufen, sowie ein gewisses Band um die jeweiligen Drehzahlen herum wird dann im stationären Betrieb des Motors M nicht zugelassen. Vielmehr werden lediglich solche Istwert-Drehzahlen nₗ von einem den Resonanz-Erfassungseinrichtungen RE1, RE2, RE3 nachgeordneten Filter FI für zulässige Drehzahlen in dem Drehzahl-Sollwertfilter DS1 an die Steuereinrichtung CO gemäß Fig. 3 weitergeleitet, die außerhalb des jeweiligen "verbotenen" Drehzahlbereiches des Motors M liegen. Dabei ist selbstverständlich ein (dynamisches) Durchfahren der kritischen Drehzahlbereiche des Motors M zur Aufnahme einer Drehzahl außerhalb der "verbotenen" Drehzahlbereiche zulässig. Es sei hier angemerkt, dass der gerade erwähnte Speicher in dem Filter FI enthalten oder diesem zugeordnet sein kann.

Bei Anliegen von anderen Sollwert-Drehzahlen bzw. Sollwerten nₛ am Eingang des Drehzahl-Sollwertfilters DS1 wird bei positivem Gradienten der betreffenden Sollwerte die Motordrehzahl an der unteren Grenze eines verbotenen Drehzahlbereichs als Istwert ausgegeben, bis der verbotene Drehzahlbereich verlassen ist. Bei negativem Gradienten der betreffenden Sollwerte n_{S} wird der Motordrehzahl des Motors M an der oberen Grenze des jeweils verbotenen Drehzahlbereichs als Istwert ausgegeben, bis der betreffende Istwert den verbotenen Drehzahlbereich verlässt. Alternativ wird generell der jeweils nächst gelegene oder der nächst niedrige oder nächsthöhere unkritische Istwert als modifizierter Istwert von dem Drehzahl-Sollwertfilter DS1 an die Steuereinrichtung CO abgegeben.

Um im Falle einer Veränderung an der Dunstabzugsvorrichtung - beispielsweise bei einer Veränderung eines Abluftkanals und damit des Strömungswiderstands - die dann vorliegenden neuen verbotenen Drehzahlbereiche des Motors M schnell und einfach ermitteln können, kann das Durchfahren des Drehzahlbereichs des Motors M zur Aufnahme der jeweils störenden Vibrationen auch durch ein gezieltes Kommando von außen her erfolgen.

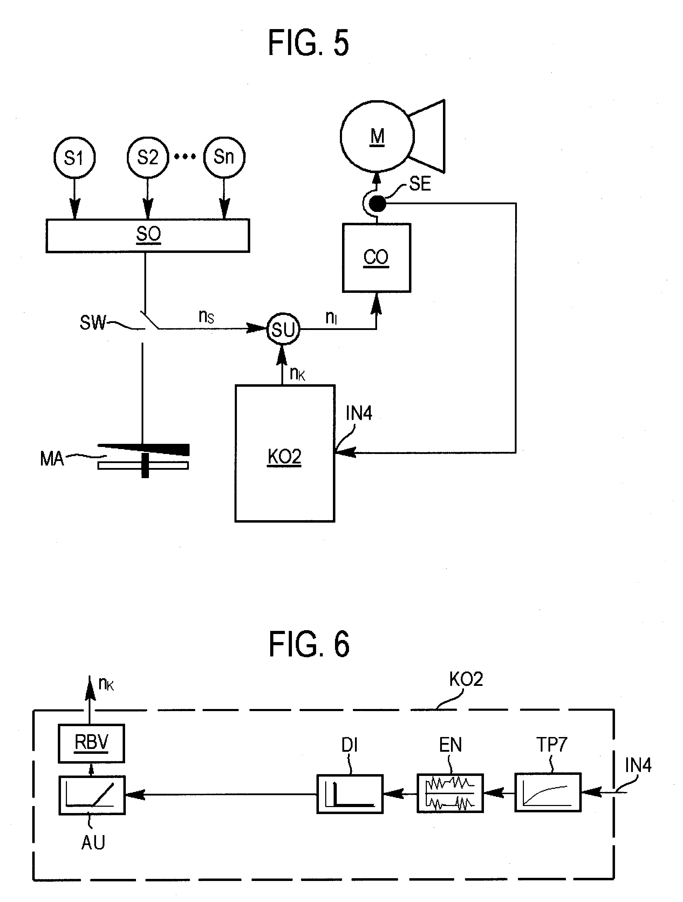

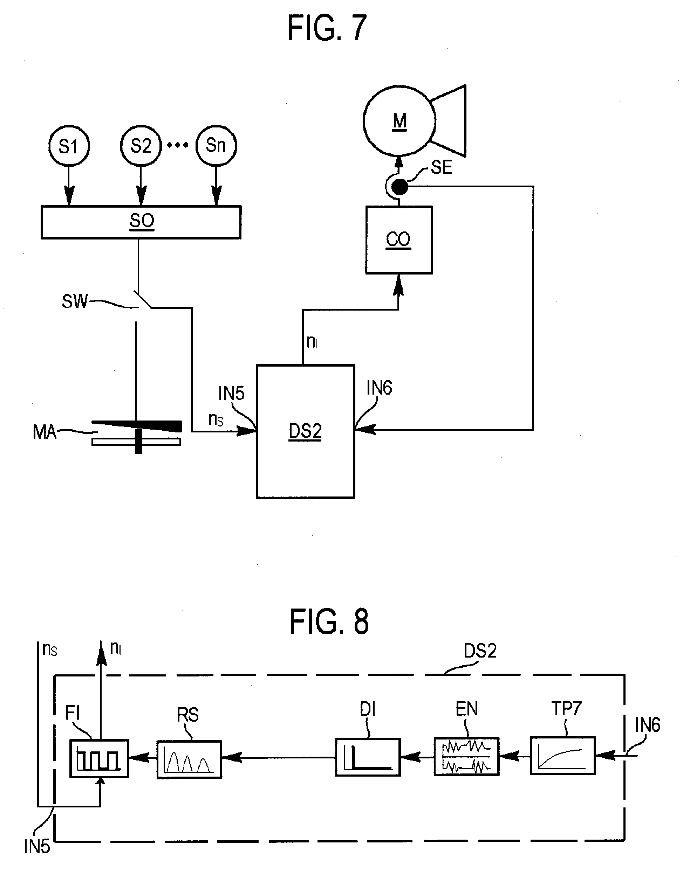

Während bei den in Fig. 1 und 3 schematisch dargestellten Vorrichtungen gemäß der ersten bzw. zweiten Ausführungsform der vorliegenden Erfindung Beschleunigungsaufnehmer zur direkten Ermittlung von vibrationsabhängigen Kenngrößen eingesetzt sind, zeigen die in Fig. 5 und 7 schematisch dargestellten Vorrichtungen gemäß der dritten und vierten Ausführungsform der vorliegenden Erfindung, wie solche Kenngrößen indirekt, also nicht mit Hilfe von Beschleunigungsaufnehmern ermittelt werden können. Zunächst wird die in Fig. 5 dargestellte Vorrichtung gemäß der dritten Ausführungsform der vorliegenden Erfindung näher betrachtet.

Die in Fig. 5 dargestellte Vorrichtung gemäß der vorliegenden Erfindung unterscheidet sich von der in Fig. 1 dargestellten Vorrichtung im wesentlichen dadurch, dass der Motor M eingangsseitig über einen Stromsensor SE mit der Ausgangsseite der zugehörigen Steuereinrichtung CO verbunden ist und dass der Stromsensor ausgangsseitig direkt mit einem Eingang bzw. Eingangsanschluss IN4 einer Drehzahl-Korrektureinrichtung KO2 verbunden, die ausgangsseitig mit dem Summierglied SU verbunden ist. Der Stromsensor SE gestattet, den vom Motor M jeweils aufgenommenen Strom zu ermitteln. Wie eingangs erläutert, zeigt dieser Strom bei Auftreten von Vibrationen, insbesondere von Resonanzvibrationen in dem den betreffenden Motor M enthaltenden Gerät Schwankungen, die für das Auftreten der betreffenden Vibrationen charakteristisch sind und die damit als vibrationsabhängige Kenngrößen herangezogen werden können. Dabei kann entweder ein Phasenstrom des Motors M oder ein Strom in einem Frequenzumrichter, z.B. ein Zwischenkreisstrom ausgewertet werden. Beispiele für weitere Größen, die hier ermittelt und ausgewertet werden können, sind ein Netzstrom und eine Zwischenkreisspannung eines Grenzumrichters. Es sei an dieser Stelle angemerkt, dass anstelle des Stromsensors SE auch ein Leistungssensor eingesetzt werden kann, mit dessen Hilfe die von dem Motor M jeweils aufgenommene Leistung ermittelt werden kann.

Bevor auf die Arbeitsweise der in Fig. 5 dargestellten Vorrichtung gemäß der Erfindung näher eingegangen wird, sei zunächst der in Fig. 6 dargestellte Aufbau der bei der Vorrichtung gemäß Fig. 5 vorgesehenen Drehzahl-Korrektureinrichtung KO2 betrachtet. Es sei an dieser Stelle jedoch bereits angemerkt, dass mit der Abgabe des Korrekturwerts bzw. der Korrekturwert-Drehzahl nₖ durch die Drehzahl-Korrektureinrichtung KO2 aus dem jeweiligen Sollwert bzw. der jeweiligen Sollwert-Drehzahl n_{S} mittels des Summiergliedes SU ein Istwert bzw. eine Istwert-Drehzahl n_{I} gebildet wird, bei dem bzw. der von der sodann in der Drehzahl-Korrektureinrichtung KO2 ermittelten Kenngröße ein für eine vorgegebene, insbesondere bei Null liegende Vibrationsstärke kennzeichnender festgelegter Schwellwert unterschritten ist. Dies bedeutet, dass die Sollwert-Drehzahl des Motors M zu einer unterhalb oder oberhalb dieser Sollwert-Drehzahl liegenden Istwert-Drehzahl verändert wird, bei der die erwähnten störenden Vibrationen und insbesondere die Resonanzvibrationen unterdrückt, zumindest aber verringert sind.

Die Drehzahl-Korrektureinrichtung KO2 weist gemäß Fig. 6 eingangsseitig ein Tiefpassfilter TP7 auf, durch das das von dem Stromsensor SE jeweils gelieferte Stromsignal geglättet wird. Ausgangsseitig ist dem Tiefpassfilter TP7 eine Hüllkurven-Erzeugungseinrichtung EN nachgeordnet, welche eine Hüllkurve des von dem Tiefpassfilter TP7 gelieferten Signals bildet. Nach Ausblenden der Grundfrequenz des betreffenden Signals können in einer der Hüllkurven-Erzeugungseinrichtung EN nachgeordneten Differenziereinrichtung DI Schwankungen in dem durch den Stromsensor SE ermittelten Strom erkannt werden, welche ebenfalls Schwankungen in der Leistung repräsentieren, die von dem Motor M aufgenommen wird. Diese Schwankungen werden bei den entsprechenden Drehzahlen durch Vibrationen, insbesondere durch Resonanzvibrationen des die in Fig. 5 dargestellte Vorrichtung enthaltenden Hausgerätes, also im vorliegenden Fall der Dunstabzugsvorrichtung hervorgerufen.

Im Ausgang der Differenziereinrichtung DI sind in der in Fig. 6 dargestellten Drehzahl-Korrektureinrichtung K02 die Ausblendeinrichtung AU und die Regler-Begrenzer-Vorzeichenauswahleinrichtung RBV nachgeordnet, die im Zusammenhang mit der in Fig. 2 dargestellten und beschriebenen Drehzahl-Korrektureinrichtung KO1 erläutert worden sind. Damit gelten bezüglich dieser Einrichtungen die entsprechenden Ausführungen, die dazu im Zusammenhang mit der Fig. 2 gemacht worden sind.

Durch die in Fig. 5 dargestellte Vorrichtung mit dem in Fig. 6 veranschaulichten Aufbau der Drehzahl-Korrektureinrichtung K02 steht somit eine weitere Vorrichtung zur direkten Erfassung, das heißt zur Online-Erfassung von Vibrationen zur Verfügung, die in einem die Vorrichtung gemäß Fig. 5 enthaltenden Hausgerät auftreten und die unterdrückt, zumindest aber verringert werden sollen. Die Vorrichtung gemäß Fig. 5 kommt dabei ohne spezielle Beschleunigungsaufnehmer aus; sie benötigt lediglich einen Strom- bzw. Leistungssensor.

Nunmehr wird auf die in Fig. 7 dargestellte Vorrichtung gemäß der vierten Ausführungsform der vorliegenden Erfindung näher eingegangen. Diese Vorrichtung entspricht in ihrem Aufbau hinsichtlich der Erfassung der vibrationsabhängigen Kenngrößen in einem die betreffende Vorrichtung enthaltenden Hausgerät der in Fig. 5 dargestellten Vorrichtung. Hinsichtlich der Ansteuerung der dem Motor M gemäß Fig. 7 zugehörigen Steuereinrichtung CO entspricht die betreffende Vorrichtung allerdings dem Aufbau der in Fig. 3 dargestellten Vorrichtung. Dies bedeutet, dass die Steuereinrichtung CO gemäß Fig. 7 im Unterschied zu der Steuereinrichtung CO gemäß Fig. 5 direkt von einem Drehzahl-Sollwertfilter DS2 angesteuert wird.

Mit der Abgabe des in diesem Fall korrigierten Istwerts bzw. der Istwert-Drehzahl nₗ durch das Drehzahl-Sollwertfilter DS2 wird der Motor M durch die Steuereinrichtung CO derart angesteuert, dass durch die sodann in dem Drehzahl-Sollwertfilter DS2 ermittelte Kenngröße ein für eine vorgegebene, insbesondere bei Null liegende Vibrationsstärke kennzeichnender festgelegter Schwellwert unterschritten ist. Dies bedeutet, dass auch hier die Sollwert-Drehzahl des Motors M zu einer unterhalb oder oberhalb dieser Sollwert-Drehzahl liegenden Istwert-Drehzahl verändert wird, bei der die erwähnten störenden Vibrationen und insbesondere die Resonanzvibrationen unterdrückt, zumindest aber verringert sind.

Das Drehzahl-Sollwertfilter DS2 weist, wie dies aus einem Vergleich der Fig. 8 mit der Fig. 6 hervorgeht, eingangsseitig denselben Aufbau auf wie die in Fig. 6 dargestellte Drehzahl-Korrektureinrichtung K2; eingangsseitig ist das Tiefpassfilter TP7 vorgesehen, dem die Hüllkurven-Erzeugungseinrichtung EN nachgeordnet ist, welcher die Differenziereinrichtung DI folgt. Am Ausgang der Differenziereinrichtung DI ist gemäß Fig. 8 jedoch eine Vibrationen- bzw. Resonanzen-Summiereinrichtung RS nachgeordnet, in der sämtliche Vibrationen und insbesondere Resonanzvibrationen der die in Fig. 7 dargestellte Vorrichtung enthaltenden Dunstabzugsvorrichtung erfasst werden.

Der Vibrationen- bzw. Resonanzen-Summiereinrichtung RS ist das Filter FI für zulässige Drehzahlen nachgeordnet, welches dem Filter FI entspricht, welches im Zusammenhang mit dem in Fig. 4 dargestellten Drehzahl-Sollwertfilter erläutert worden ist. Damit gelten für die Funktionsweise des in Fig. 8 dargestellten Drehzahl-Sollwertfilters DS2 und damit auch für die in Fig. 7 dargestellte Vorrichtung die Erläuterungen, die bezüglich des Filters FI im Zusammenhang mit dem in Fig. 4 dargestellten Drehzahl-Sollwertfilter gegeben worden sind. Somit erfolgt auch mit der in Fig. 7 dargestellten Vorrichtung gemäß der vorliegenden Erfindung eine Offline-Erfassung von störenden Vibrationen, insbesondere von störenden Resonanzvibrationen, die von einem mit dem Motor M versehenen Hausgerät, im vorliegenden Fall also von einer Dunstabzugsvorrichtung beim Lauf des auf unterschiedliche Drehzahlen einstellbaren Motors M während zumindest einer bestimmten Drehzahl erzeugt werden. Diese störenden Vibrationen werden bei der Vorrichtung gemäß Fig. 7 wie bei der Vorrichtung gemäß Fig. 5 durch Ermitteln und Verarbeiten von vibrationsabhängigen Kenngrößen unterdrückt, zumindest aber verringert, die aus Schwankungen eines den betreffenden Motor M durchfließenden Stromes oder einer von dem betreffenden Motor M jeweils aufgenommenen Leistung abgeleitet sind.

Abschließend sei nochmals darauf hingewiesen, dass die vorliegende Erfindung auf die beschriebenen Ausführungsformen nicht beschränkt ist und dass sie bei jeglichem Hausgerät und überdies auch bei jeglichen Geräten angewandt werden kann, bei denen beim Lauf eines zugehörigen Motors, insbesondere eines Elektromotors, störende Vibrationen, insbesondere Resonanzvibrationen auftreten, die es zu unterdrücken, zumindest aber zu verringern gilt.

### Bezugszeichenliste

- AU: Ausblendeinrichtung
- B1, B2, B3: Beschleunigungsaufnehmer
- CO: Steuereinrichtung
- D1, D2, D3: Dämpfungen
- DI: Differenziereinrichtung
- DS1, DS2: Drehzahl-Sollwertfilter
- EN: Hüllkurven-Erzeugungseinrichtung
- FI: Filter
- GL1, GL2, GL3: Gleichrichter
- GW1, GW2, GW3: Gewichtungseinrichtungen
- IN1, IN2, IN3: Eingänge
- IN4, IN5, IN6: Eingänge
- KO1, KO2: Drehzahl-Korrektureinrichtung
- M: Motor, Elektromotor
- MA: manuelles Einstellglied
- n_{I}: Istwert bzw. Istwert-Drehzahl
- n_{K}: Korrekturwert bzw. Korrekturwert-Drehzahl
- n_{S}: Sollwert bzw. Sollwert-Drehzahl
- Q1, Q2, Q3: Schwingungsquellen
- RBV: Regler-Begrenzer-Vorzeichenauswahleinrichtung
- RE1, RE2, RE3: Resonanz-Erfassungseinrichtungen
- RS: Vibrationen- bzw. Resonanzen-Summiereinrichtung
- S1, S2, Sn: Sensoren
- SE: Stromsensor
- SEL: Auswahleinrichtung
- SO: Sollwert-Bildungseinrichtung
- SU: Summierglied
- SW: Schalter
- TP1, TP2, TP3: Tiefpassfilter
- TP4, TPS, TP6, TP7: Tiefpassfilter

## Patentansprüche

1. Verfahren zum Unterdrücken, zumindest aber zum Verringern einer oder mehrerer störender Vibrationen, insbesondere von Resonanzvibrationen, die von einem mit einem Motor versehenen Gerät, insbesondere von einen Hausgerät beim Lauf des auf unterschiedliche Drehzahlen einstellbaren Motors während zumindest einer bestimmten Drehzahl erzeugt werden,
**dadurch gekennzeichnet, dass** die jeweilige Vibration an Hand zumindest einer vibrationsabhängigen Kenngröße ermittelt wird und dass die jeweilige Sollwert-Drehzahl (nₛ) des Motors (M) auf ein der jeweils ermittelten Kenngröße entsprechendes Steuersignal hin durch ihr Erhöhen und/oder Verringern auf eine Istwert-Drehzahl (n_{I}) korrigiert wird, bei der von der sodann ermittelten Kenngröße ein für eine vorgegebene, insbesondere bei Null liegende Vibrationsstärke kennzeichnender festgelegter Schwellwert unterschritten ist.

2. Verfahren nach Anspruch 1, **dadurch gekennzeichnet, dass** die jeweilige vibrationsabhängige Kenngröße mittels wenigstens eines an bzw. in dem Hausgerät untergebrachten Beschleunigungsaufnehmers (B1, B2, B3) ermittelt wird.

3. Verfahren nach Anspruch 2, **dadurch gekennzeichnet, dass** die jeweilige vibrationsabhängige Kenngröße mittels an bzw. in dem Hausgerät untergebrachter Beschleunigungsaufnehmer (B1, B2, B3) für mehrere Achsen im kartesischen Koordinatensystem ermittelt wird.

4. Verfahren nach Anspruch 2 oder 3, **dadurch gekennzeichnet, dass** von dem jeweiligen Beschleunigungsaufnehmer (B1, B2, B3) in einem sämtliche Drehzahlbereiche des Motors (M) umfassenden Suchlauf abgegebene Ausgangssignale aufgenommen und kritische Drehzahlbereiche nach Identifizierung in einem Speicher abgespeichert werden, auf den zur Steuerung der jeweiligen Istwert-Drehzahl (n_{I}) des Motors (M) Bezug genommen wird.

5. Verfahren nach Anspruch 1, **dadurch gekennzeichnet, dass** die vibrationsabhängigen Kenngrößen aus Schwankungen eines den von dem durch einen Elektromotor gebildeten Motor (M) jeweils durchfließenden Stromes oder aus Schwankungen eines die von dem Motor (M) jeweils aufgenommenen Leistung repräsentierenden Signals abgeleitet werden.

6. Verfahren nach Anspruch 5, **dadurch gekennzeichnet, dass** das den Elektromotor (M) jeweils durchfließenden Strom repräsentierende Signal oder das die von dem Elektromotor (M) jeweils aufgenommene Leistung repräsentierende Signal in einem sämtliche Drehzahlbereiche des betreffenden Elektromotors (M) umfassenden Suchlauf aufgenommen wird und dass kritische Drehzahlbereiche nach Identifizierung von Schwankungen des betreffenden Stromes oder der betreffenden Leistung in einem Speicher abgespeichert werden, auf den zur Steuerung der jeweiligen Istwert-Drehzahl des Elektromotors (M) Bezug genommen wird.

7. Vorrichtung zum Unterdrücken, zumindest aber zum Verringern einer oder mehrerer störender Vibrationen, insbesondere von Resonanzvibrationen, die von einem mit einem Motor versehenen Gerät, insbesondere von einen Hausgerät beim Betrieb des durch eine mit dem Motor verbundene Sollwert-Drehzahl-Abgabeeinrichtung auf unterschiedliche Drehzahlen einstellbaren Motors während zumindest einer bestimmten Drehzahl erzeugbar sind,
**dadurch gekennzeichnet, dass** eine die jeweilige Vibration repräsentierende Kenngröße ermittelnde Erfassungseinrichtung (B1, B2, B3; SE) vorgesehen ist, dass in die Verbindung zwischen der Sollwert-Drehzahl-Abgabeeinrichtung (S1, S2 ... Sn, SO, SW, MA) und einer den Motor (M) in seiner Drehzahl steuernden Steuereinrichtung (CO) eine Drehzahl-Korrektureinrichtung (SU, KO1; DS1; SU, KO2; DS2) eingefügt ist und dass die Drehzahl-Korrektureinrichtung (SU, KO1; DS1; SU, KO2; DS2) mit der Erfassungseinrichtung (B1, B2, B3; SE) durch eine Korrektur-Steuereinrichtung (KO1; DS1; KO2; DS2) verbunden ist, welche die von der Sollwert-Drehzahl-Abgabeeinrichtung (S1, S2 ... Sn, SO, SW, MA) durch Abgabe eines Sollwert-Drehzahlsignals festgelegte Sollwert-Drehzahl (n_{S}) zu einer solchen Istwert-Drehzahl (n_{I}) zu korrigieren gestattet, bei der ein die jeweilige Kenngröße repräsentierendes Signal unterhalb eines festgelegten Schwellwertes liegt.

8. Vorrichtung nach Anspruch 7, **dadurch gekennzeichnet, dass** in bzw. an dem Hausgerät zumindest ein Beschleunigungsaufnehmer (B1, B2, B3) für die Ermittlung der für die jeweilige Vibration kennzeichnenden Kenngröße vorgesehen ist.

9. Vorrichtung nach Anspruch 8, **dadurch gekennzeichnet, dass** in bzw. an dem Hausgerät Beschleunigungsaufnehmer (B1, B2, B3) für mehrere Achsen im kartesischen Koordinatensystem untergebracht sind, längs der die vibrationsabhängigen Kenngrößen ermittelbar sind.

10. Vorrichtung nach Anspruch 8 oder 9, **dadurch gekennzeichnet, dass** mit dem jeweiligen Beschleunigungsaufnehmer (B1, B2, B3) eine Speicher- und Auswerteeinrichtung verbunden ist, in der Ausgangssignale des jeweiligen Beschleunigungsaufnehmers (B1, B2, B3) in einem sämtliche Drehzahlbereiche des Motors (M) umfassenden Suchlauf aufnehmbar und Vibrationen hervorrufende kritische Drehzahlbereiche identifizierbar sind,
und dass der Motor (M) durch die Steuereinrichtung (CO) lediglich mit außerhalb der kritischen Drehzahlbereiche liegenden Drehzahlen antreibbar ist.

11. Vorrichtung nach Anspruch 8 oder 9, **dadurch gekennzeichnet, dass** eine Strom-Messeinrichtung (SE) oder eine Leistungs-Messeinrichtung vorgesehen ist, durch die die vibrationsabhängigen Kenngrößen repräsentierende Schwankungen des den durch einen Elektromotor (M) gebildeten Motor (M) jeweils durchfließenden Stromes bzw. die von diesem Motor (M) jeweils aufgenommene Leistung messbar sind.

12. Vorrichtung nach Anspruch 11, **dadurch gekennzeichnet, dass** mit der Strom-Leistungs-Messeinrichtung (SE) eine Speicher- und Auswerteeinrichtung (FI) verbunden ist, in der Ausgangssignale der Strom-Leistungs-Messeinrichtung (SE) in einem sämtliche Drehzahlbereiche des Motors (M) umfassenden Suchlauf aufnehmbar und Vibrationen hervorrufende kritische Drehzahlbereiche identifizierbar sind, und dass der Motor (M) durch die Steuereinrichtung (CO) lediglich mit außerhalb der kritischen Drehzahlbereiche liegenden Drehzahlen antreibbar ist.
